# FASCICULE DE BREVET EUROPEEN

(11) **EP 1 614 640 B1**
(45) Date de publication et mention de la délivrance du brevet: **09.09.2009**
(21) Numéro de dépôt: 05352014.4
(22) Date de dépôt: 07.07.2005
(51) Int. Cl.: B65D 81/02, B32B 5/08, B32B 3/20, B32B 3/28, B65D 65/40, B65D 81/127

(54) **Panneau composite pour la réalisation de structures et emballage réalisé avec un tel panneau composite**
Verbundplatte zur Herstellung von Strukturen sowie mit dieser hergestellte Behälter
Composite panel for making structures and package made from said panel

(30) Priorité: 08.07.2004 FR 0407601
(43) Date de publication de la demande: 11.01.2006
(73) Titulaire: Fleuret SA, 31650 St. Orens de Gameville (FR)
(72) Inventeur: Larger, Nicolas, 31500 Toulouse (FR)
(74) Mandataire: Santarelli

(56) Documents cités:
- EP-A- 0 707 947
- EP-A- 0 928 748
- WO-A-03/078155
- FR-A- 1 594 303
- FR-A- 2 666 312
- GB-A- 1 310 962
- US-A- 3 664 906
- US-A- 5 111 957
- US-A1- 2001 010 854

## Description

La présente invention concerne un panneau composite destiné à la réalisation de structures ainsi qu'un emballage réalisé avec un tel panneau.

Le domaine technique de la présente invention est par exemple le transport de matériels fragiles comme par exemple des appareils de mesure, des pièces mécaniques de précision, du matériel électronique, etc.... Pour transporter de tels matériels, il est connu de réaliser des conteneurs, le plus souvent parallélépipédiques, de placer le matériel à transporter dans le conteneur en comblant l'espace restant entre le matériel et les parois du conteneur avec de la mousse.

Les conteneurs utilisés doivent présenter des caractéristiques mécaniques (résistance aux chocs, à l'écrasement, aux impacts, etc...) et parfois également des caractéristiques électriques (résistance à la foudre). Il est alors habituel de réaliser de tels conteneurs à partir de panneaux composites type sandwich. L'inconvénient des structures habituelles est que le panneau utilisé présente une densité relativement importante.

Il est également connu d'utiliser une structure en nid d'abeille (l'axe longitudinal des alvéoles de cette structure est alors perpendiculaire au panneau). Une telle structure présente une densité moindre mais est d'un coût de revient relativement important. En outre, un tel panneau présente un volume relativement important.

Enfin, WO 03/078155 et FR 1 594 303 proposent un panneau selon le préambule de la revendication 1 annexé, composé d'une part d'une feuille ondulée, et d'autre part d'au moins une feuille plane, par exemple en aluminium, qui recouvre la feuille ondulée et est liée aux crêtes de cette dernière. Un tel panneau présente des caractéristiques mécaniques (résistance aux chocs et aux charges notamment) insuffisantes.

La présente invention concerne également d'autres domaines techniques. Un emballage rigide est une structure autoporteuse et des panneaux rigides servant à réaliser un tel emballage peuvent également être utilisés dans d'autres applications. Ainsi par exemple une paroi rigide peut être utilisée pour l'aménagement intérieur d'espaces. Pour réaliser des cloisons de séparation, il est déjà connu d'utiliser une âme en polyéthylène plein, ou en nid d'abeilles, prise en sandwich entre deux faces externes qui peuvent être éventuellement en aluminium.

La présente invention a alors pour but de fournir un nouveau panneau destiné à la réalisation de structures, notamment pour des emballages destinés à du matériel fragile ou pour des cloisons, qui présente de bonnes caractéristiques mécaniques tout en étant léger et bon marché.

A cet effet, elle propose un panneau destiné à la réalisation de structures conforme à la revendication 1.

La coopération de l'aluminium avec la matière synthétique alvéolaire permet d'obtenir de façon surprenante un panneau rigide, léger et d'un prix de revient peu élevé.

L'âme d'un panneau selon l'invention est de préférence réalisée dans une matière synthétique choisie dans l'ensemble comportant le polypropylène et le polycarbonate.

Pour une plus grande rigidité, les deux faces opposées de l'âme sont avantageusement recouvertes d'une feuille d'aluminium mais il est envisageable de n'avoir qu'une seule face de l'âme recouverte avec une feuille d'aluminium.

Dans un panneau selon l'invention, l'âme en matière synthétique utilisée présente avantageusement la forme d'un carton ondulé. Ceci permet de réaliser le panneau à coût réduit car le "carton ondulé plastique" est un produit courant et bon marché.

Pour réaliser un panneau selon l'invention, chaque feuille métallique est par exemple fixée sur l'âme par collage. On retrouve ainsi, entre l'âme et chaque feuille métallique, une fine couche de colle ou bien des zones d'encollage. Pour favoriser ce collage, l'âme du panneau présente avantageusement un traitement corona.

La présente invention concerne également un emballage destiné notamment au transport de matériels fragiles, **caractérisé en ce qu**'il comporte au moins une paroi réalisée avec un panneau tel que décrit ci-dessus.

Un tel emballage se présente par exemple sous la forme d'un conteneur parallélépipédique, les six faces du conteneur étant réalisées avec un panneau tel que décrit ci-dessus, et les faces du conteneur étant assemblées à l'aide de cornières.

Une autre forme de réalisation d'un emballage selon l'invention prévoit que cet emballage comporte deux panneaux tels que décrits ci-dessus, ces panneaux étant reliés par une charnière, les âmes de ces deux panneaux étant reliées entre elles et ne formant qu'une seule pièce, la partie de cette pièce se trouvant entre les deux panneaux formant la charnière. Des cales en mousse sont alors par exemple collées sur au moins une face d'un panneau de l'emballage pour favoriser le calage d'objets fragiles prenant place dans l'emballage.

Des détails et avantages de la présente invention ressortiront mieux de la description qui suit, faite en référence au dessin schématique annexé sur lequel :
La figure 1 est une vue en perspective éclatée d'un panneau selon l'invention,
La figure 2 représente en perspective un conteneur selon l'invention, et
La figure 3 montre un autre emballage réalisé avec un panneau tel celui de la figure 1.

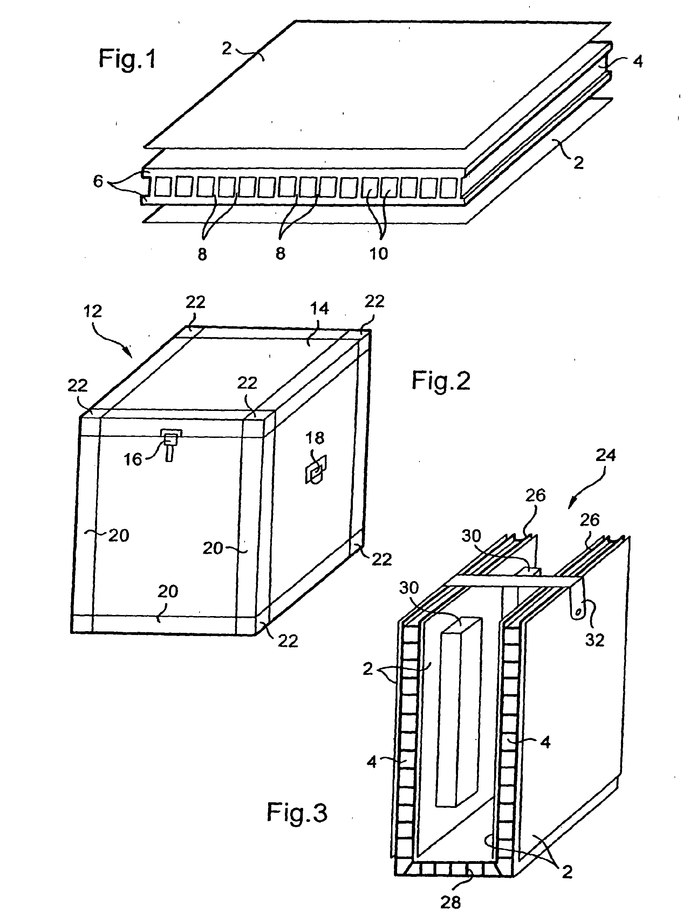

La figure 1 représente en éclaté un panneau selon l'invention. Ce panneau comporte deux peaux externes 2 en aluminium et une âme 4 en matière synthétique.

Chaque peau externe 2 est formée par une feuille en aluminium. L'épaisseur de cette feuille est d'environ 1 mm. Selon les caractéristiques mécaniques que l'on souhaite donner au panneau, les peaux externes 2 pourront avoir une épaisseur comprise entre quelques dixièmes de millimètres et quelques millimètres. Il est tout à fait envisageable d'avoir deux peaux externes 2 d'épaisseurs différentes.

Le matériau utilisé pour les peaux externes 2 est de préférence de l'aluminium mais il peut également s'agir d'un alliage à base d'aluminium. Un tel matériau est utilisé préférentiellement pour ses caractéristiques mécaniques, sa relativement faible densité ainsi que pour ses caractéristiques électriques. En effet, l'utilisation d'aluminium est intéressante pour la réalisation de conteneurs devant résister à la foudre.

L'âme 4 est constituée d'une couche d'un matériau connu également sous le nom de "carton ondulé plastique". Il s'agit d'un matériau alvéolaire réalisé en matière synthétique, par exemple en polypropylène. Cette âme 4 comporte ainsi deux faces extérieures 6 reliées entre elles par des nervures 8. Ces dernières sont toutes parallèles les unes aux autres et s'étendent sur sensiblement toute la longueur de l'âme 4 dans une direction donnée. Ces nervures 8 délimitent des canaux 10 formant des alvéoles s'étendant parallèlement aux faces externes 6 de l'âme 4. Selon les caractéristiques mécaniques recherchées, l'épaisseur de l'âme 4 peut varier de quelques millimètres à environ 20 cm, plus particulièrement de 3 à 50 mm. En variante de réalisation, cette âme 4 peut également être réalisée en polycarbonate.

Les faces externes 6 de l'âme 4 forment des feuilles sensiblement planes. Leur surface extérieure a subi de préférence un traitement corona. Un tel traitement permet de modifier les caractéristiques de la surface extérieure de l'âme 4. Ce traitement physico-chimique permet d'augmenter la qualité d'adhésion de l'âme 4 pour son assemblage avec les peaux externes 2. Cet assemblage est réalisé par exemple par collage. Tout type de colle compatible avec le polypropylène et l'aluminium peut être utilisé ici.

Un panneau tel que décrit ci-dessus peut être utilisé pour la réalisation d'un conteneur 12 tel celui représenté sur la figure 2. Dans la forme de réalisation représentée au dessin, ce conteneur est parallélépipédique et comporte donc six panneaux assemblés les uns avec les autres. L'un de ces panneaux forme par exemple un couvercle 14. Ce dernier est alors articulé à l'aide de charnières (non représentées) sur un panneau latéral. Du côté opposé aux charnières, des fermoirs 16 sont par exemple prévus pour permettre de maintenir le couvercle 14 en position fermée. Des faces latérales du conteneur 12 présentent avantageusement des poignées 18 de transport.

L'assemblage des divers panneaux formant le conteneur 12 peut être réalisé de différentes manières. Dans la forme de réalisation représentée au dessin, des cornières 20 relient deux à deux les panneaux constitutifs du conteneur 12. Des capots 22, réalisés par exemple dans une matière élastique tel du caoutchouc, viennent par exemple aux huit coins du conteneur 12.

La figure 3 représente un autre emballage 24 réalisé avec des panneaux selon l'invention. En position fermée, représentée sur la figure 3, l'emballage 24 comporte deux panneaux 26 se faisant face ainsi qu'une charnière 28.

Les âmes 4 des deux panneaux 26 et la charnière 28 ne forment qu'une seule pièce. L'emballage 24 est ainsi réalisé en prenant une grande plaque de matière synthétique alvéolaire et en collant sur chacune des faces de celle-ci deux peaux externes 2 en aluminium de manière à recouvrir toute la plaque en matière synthétique, sauf au niveau d'une bande centrale destinée à former la charnière 28. Cette plaque est alors pliée deux fois, à chaque fois au bord d'une peau externe 2 de manière à réaliser l'emballage 24.

En variante de réalisation, on peut prévoir que sur une face la plaque de matière synthétique est entièrement recouverte d'une feuille d'aluminium. Ceci est possible dans la mesure où cette feuille d'aluminium est d'épaisseur peu importante, de manière à permettre son pliage.

Du côté opposé à la charnière 28, un système de fermeture peut être prévu. Il s'agit par exemple d'une (ou plusieurs) attache reliant les deux panneaux 26 se faisant face. Selon le matériel transporté, il peut par exemple s'agir d'une attache 32 élastique qui permet de maintenir le matériel placé entre les panneaux 26 avec un léger serrage.

Comme on peut le voir sur la figure 3, des cales de mousse 30 peuvent être fixées par exemple par collage, sur les faces des panneaux 26 se trouvant en vis-à-vis. Ces cales 30 permettent de réaliser un bon maintien du matériel transporté sans risquer de l'abîmer.

L'utilisation de panneaux selon l'invention présente de nombreux avantages par rapport aux panneaux de l'art antérieur pour la réalisation de conteneurs. Tout d'abord, ces panneaux sont d'un prix de revient peu élevé. En effet, les matériaux de base utilisés pour la réalisation de ces panneaux sont relativement bon marché et il n'y a pas de difficulté particulière pour réaliser un panneau selon l'invention, notamment lorsque l'âme de ce panneau a subi un traitement corona.

Les panneaux réalisés présentent l'avantage d'être à la fois très résistants et très légers. Ils sont également d'un volume réduit.

Les essais réalisés sur un panneau selon l'invention ont montré qu'en cas de choc, l'âme en polypropylène (ou autre matériau synthétique) absorbe le choc élastiquement tandis que la couche externe en aluminium absorbe le choc plastiquement. L'âme en matière synthétique permet ainsi lors d'un choc de restituer une partie de l'énergie de ce choc en tendant à faire revenir la couche externe en aluminium dans sa position initiale.

La présente invention ne se limite pas aux formes de réalisation décrites ci-dessus à titre d'exemples non limitatifs. Elle concerne également toutes les variantes de réalisation à la portée de l'homme du métier dans le cadre des revendications ci-après.

Ainsi, par exemple, un panneau composite selon l'invention peut être utilisé dans tout type d'emballage. Dans certaines applications, le panneau utilisé comportera éventuellement une seule peau externe en aluminium.

On peut également prévoir deux (ou plusieurs) épaisseurs de "carton ondulé plastique" pour réaliser un panneau selon l'invention.

Un panneau tel que décrit peut également être utilisé pour la réalisation de cloisons ou de façades dans le domaine du bâtiment. Un tel panneau forme alors une structure autoporteuse intéressante car elle est bon marché, de masse réduite et résistante. La masse réduite et la rigidité d'un panneau selon l'invention fait que celui-ci peut également être utilisé dans le domaine de l'aéronautique et de l'espace.

## Revendications

1. Panneau destiné à la réalisation de structures, comportant une âme (4) et au moins une feuille (2) métallique réalisée à base d'aluminium, ladite âme (4) étant réalisée en matière synthétique alvéolaire dont les alvéoles (10) s'étendent parallèlement à la feuille (2) métallique,
**caractérisé en ce que** l'âme (4) présente deux faces (6) extérieures sensiblement planes, la feuille (2) métallique recouvrant l'une de ces faces.

2. Panneau selon la revendication 1, **caractérisé en ce que** l'âme (4) est réalisée dans une matière synthétique choisie dans l'ensemble comportant le polypropylène et le polycarbonate.

3. Panneau selon l'une des revendications 1 ou 2, **caractérisé en ce que** les deux faces (6) opposées de l'âme (4) sont recouvertes d'une feuille (2) d'aluminium.

4. Panneau selon l'une des revendications 1 à 3, **caractérisé en ce que** l'âme (4) en matière synthétique présente la forme d'un carton ondulé.

5. Panneau selon l'une des revendications 1 à 4, **caractérisé en ce que** chaque feuille (2) métallique est fixée sur l'âme (4) par collage.

6. Panneau selon la revendication 5, **caractérisé en ce que** l'âme (4) présente un traitement corona.

7. Emballage (12, 24) destiné notamment au transport de matériels fragiles, **caractérisé en ce qu'**il comporte au moins une paroi (26) réalisée avec un panneau selon l'une des revendications 1 à 6.

8. Emballage (12) selon la revendication 7, **caractérisé en ce qu'**il se présente sous la forme d'un conteneur (12) parallélépipédique, **en ce que** les six faces du conteneur (12) sont réalisées avec un panneau selon l'une des revendications 1 à 6, et **en ce que** les faces du conteneur sont assemblées à l'aide de cornières (20).

9. Emballage (24) selon la revendication 7, **caractérisé en ce qu'**il comporte deux panneaux (26) selon l'une des revendications 1 à 6 reliés par une charnière (28), **en ce que** les âmes (4) de ces deux panneaux (26) sont reliées entre elles et ne forment qu'une seule pièce, la partie de cette pièce se trouvant entre les deux panneaux (26) formant la charnière (28).

10. Emballage (24) selon la revendication 9, **caractérisé en ce que** des cales en mousse (30) sont collées sur au moins une face d'un panneau (26) de l'emballage (24).

## Claims

1. A panel adapted for forming structures, comprising a core (4) and at least one aluminum-based metallic sheet (2), said core (4) being formed from cellular synthetic material of which the cells (10) extend parallel to the metallic sheet (2),
**characterized in that** the core (4) has two substantially flat outer faces (6), the metallic sheet (2) covering one of those faces.

2. A panel according to claim 1, **characterized in that** the core (4) is formed from a synthetic material chosen from the group comprising polypropylene and polycarbonate.

3. A panel according to one of claims 1 or 2 **characterized in that** the two opposite faces (6) of the core (4) are covered by an aluminum sheet (2)

4. A panel according to one of claims 1 to 3, **characterized in that** the core (4) of synthetic material has the form of a corrugated board.

5. A panel according to one of claims 1 to 4, **characterized in that** each metallic sheet (2) is fixed to the core (4) by bonding.

6. A panel according to claim 5, **characterized in that** the core (4) has undergone corona treatment.

7. An item of packaging (12, 24) adapted in particular for the transport of fragile equipment, **characterized in that** it comprises at least one wall (26) formed from a panel according to one of claims 1 to 6.

8. An item of packaging (12) according to claim 7, **characterized in that** it has the form of a parallelepiped container (12), and **in that** the six faces of the container (12) are formed from a panel according to one of claims 1 to 6, and **in that** the faces of the container are assembled using angle section members (20).

9. An item of packaging (24) according to claim 7, **characterized in that** it comprises two panels (26) according to one of claims 1 to 6 linked by a hinge (28), **in that** the cores (4) of said two panels (26) are linked together and form a single piece, the part of that piece located between the two panels (26) forming the hinge (28).

10. An item of packaging (24) according to claim 9, **characterized in that** foam wedges (30) are bonded to at least one face of a panel (26) of the item of packaging (24).

## Patentansprüche

1. Platte zum Herstellen von Anordnungen, die einen Kern (4) und wenigstens ein Metallblech (2), das auf Aluminiumbasis hergestellt ist, umfasst, wobei der Kern (4) aus zellenförmigem Kunststoff hergestellt ist, dessen Zellen (10) sich parallel zu dem Metallblech (2) erstrecken,
**dadurch gekennzeichnet, dass** der Kern (4) zwei merklich plane Außenflächen (6) aufweist, wobei das Metallblech (2) eine dieser Flächen abdeckt.

2. Platte nach Anspruch 1, **dadurch gekennzeichnet, dass** der Kern (4) in einem Kunststoff hergestellt ist, der aus der Gesamtheit, die Polypropylen und Polycarbonat umfasst, ausgewählt ist.

3. Platte nach einem der Ansprüche 1 oder 2, **dadurch gekennzeichnet, dass** die zwei Flächen (6), die dem Kern (4) gegenüberliegen, mit einem Aluminiumblech (2) abgedeckt sind.

4. Platte nach einem der Ansprüche 1 bis 3, **dadurch gekennzeichnet, dass** der Kern (4) aus Kunststoff die Form einer Wellpappe aufweist.

5. Platte nach einem der Ansprüche 1 bis 4, **dadurch gekennzeichnet, dass** jedes Metallblech (2) mittels Kleben an dem Kern (4) befestigt ist.

6. Platte nach Anspruch 5, **dadurch gekennzeichnet, dass** der Kern (4) eine Koronabehandlung aufweist.

7. Verpackung (12, 24), die im Besonderen zum Transport von zerbrechlichen Materialien bestimmt ist, **dadurch gekennzeichnet, dass** sie wenigstens eine Wand (26) umfasst, die mit einer Platte nach einem der Ansprüche 1 bis 6 hergestellt ist.

8. Verpackung (12) nach Anspruch 7, **dadurch gekennzeichnet, dass** sie die Form eines parallelepipedischen Behälters (12) aufweist, dass die sechs Flächen des Behälters (12) mit einer Platte nach einem der Ansprüche 1 bis 6 hergestellt sind und dass die Flächen des Behälters mit Hilfe von Winkeln (20) zusammengesetzt sind.

9. Verpackung (24) nach Anspruch 7, **dadurch gekennzeichnet, dass** sie zwei Platten (26) nach einem der Ansprüche 1 bis 6 umfasst, die mit einem Gelenk (28) verbunden sind, dass die Kerne (4) dieser zwei Platten (26) miteinander verbunden sind und lediglich ein einziges Einzelteil bilden, wobei der Teil dieses Einzelteils, der sich zwischen den zwei Platten (26) befindet, das Gelenk (28) bildet.

10. Verpackung (24) nach Anspruch 9, **dadurch gekennzeichnet, dass** Schaumstoffklötze (30) auf wenigstens eine Fläche einer Platte (26) der Verpackung (24) geklebt sind,
